# EUROPÄISCHE PATENTSCHRIFT

(11) **EP 0 976 670 B1**
(45) Veröffentlichungstag und Bekanntmachung des Hinweises auf die Patenterteilung: **26.03.2003**
(21) Anmeldenummer: 98113957.9
(22) Anmeldetag: 25.07.1998
(51) Int. Cl.: B65G 53/12, B65G 53/46

(54) **Einrichtung zum pneumatischen Fördern pulverförmiger oder körniger Materialien**
Apparatus for the pneumatic conveyance of pulverized or granulated matter
Dispositif de transport pneumatique de matériau pulvérulent ou granulé

(43) Veröffentlichungstag der Anmeldung: 02.02.2000
(73) Patentinhaber: Stag AG, CH-7304 Maienfeld (CH)
(72) Erfinder: Gloor, Christian, 9475 Sevelen (CH)
(74) Vertreter: Althoff, Gerhard

(56) Entgegenhaltungen:
- WO-A-97/37916
- GB-A- 2 014 546

## Beschreibung

Die Erfindung bezieht sich auf eine Einrichtung zum pneumatischen Fördern pulverförmiger oder körniger Materialien, bestehend aus einem mit einer Auslaufeinheit verbundenen Vorratsbehälter, einer eintrittsseitig daran angeordneten Abdeckplatte und einer daran gelagerten Schwenkvorrichtung für ein in dem Behälter-Innenraum an einem Tragarm gelagertes Verschlusselement, welches mittels der Schwenkvorrichtung um die vertikale Achse eines Achskörpers etwa in horizontaler Ebene relativ zu einer in der Abdeckplatte vorgesehenen Eintrittsöffnung schwenkbar und bei gleichzeitiger Unterbrechung des Materialstroms schliessend damit in Eingriff oder zum Beschicken des Vorratsbehälters öffnend ausser Eingriff bringbar ist.

Aus der Druckschrift (WO 97/37916) ist zum Fördern fester Materialien, beispielsweise körniger oder pulverförmiger Materialien eine mit mehreren über eine Zuführleitung miteinander verbundenen Behältern versehene Fördereinrichtung bekannt, bei welcher das Material von einem Sammelbehälter über einen zugeordneten Einfülltrichter einem damit verbundenen Behälter zuführbar ist. An dem Einfülltrichter ist an der dem druckluftbeaufschlagten Innenraum des Sammelbehälters zugewandten Seite ein um die vertikale Achse eines Achskörpers mit daran angeordneter Druckfeder schwenkbarer Tragarm sowie ein daran gelagertes Verschlusselement angeordnet, welches durch eine in horizontaler Ebene orientierte Schwenkbewegung des Tragarms bei gleichzeitiger Unterbrechung des Materialstroms mit der Austrittsöffnung des in Fliessrichtung sich konisch verjüngenden Einfülltrichters in Eingriff und zum Beschicken des Behälters wieder ausser Eingriff bringbar ist.

Weiterhin ist aus der GB-A 2 014 546 eine Fördereinrichtung mit mehreren in vertikaler Richtung miteinander in Verbindung stehenden Behältern für Materialien in Form von Kohle oder pulverförmiger Kohleabfälle bekannt, welche im wesentlichen einen Füllbehälter, einen Sammelbehälter sowie einen damit in Verbindung stehenden Lagerbehälter mit austrittsseitig daran angeordneter Dosiervorrichtung mit integriertem und rotierend angetriebenem Schaufelrad umfasst. Der Füllbehälter steht über eine erste Durchtrittsöffnung mit dem Sammelbehälter und dieser über eine zweite Durchtrittsöffnung mit dem Lagerbehälter in Verbindung, wobei den beiden Durchtrittsöffnungen jeweils ein um eine vertikale Achse schwenkbar gelagertes und damit in Eingriff oder ausser Eingriff bringbares Verschlusselement zugeordnet ist. Bei dieser Fördereinrichtung bewirken die relativ zu den Durchtrittsöffnungen schwenkbaren Verschlusselemente jeweils eine Unterbrechung des Materialstroms von dem einen Behälter zum anderen Behälter. Eine Abdichtfunktion des einzelnen Verschlusselements in Bezug auf die zugeordnete Durchtrittsöffnung sowie entsprechende Mittel zur Erreichung einer exakten Abdichtung sind bei dieser Fördereinrichtung nicht vorgesehen.

Der Erfindung liegt die Aufgabe zugrunde, eine Einrichtung gemäss der im Oberbegriff des Anspruchs 1 genannten Art dahingehend zu verbessern, dass auch bei Materialien mit unterschiedlichen Eigenschaften, insbesondere aber bei Materialen mit extrem abrasiven Eigenschaften unter Beibehaltung einer längerfristigen Betriebsdauer sowie auch bei einer etwaigen Überfüllung des Vorratsbehälters ein exaktes Verschliessen und Abdichten der in der Abdeckplatte vorgesehenen Eintrittsöffnung gewährleistet ist.

Die erfindungsgemässe Einrichtung ist gekennzeichnet durch eine an dem Verschlusselement an der der Abdeckplatte zugewandten Seite angeordnete kreisringförmige Anlagefläche, welche bei der Schwenkbewegung des Verschlusselements mit einer in Umfangsrichtung der Eintrittsöffnung zugeordneten kreisringförmigen Dichtfläche abdichtend in Eingriff bringbar ist, wobei das Verschlusselement zusätzlich durch ein an dem Tragarm abgestütztes Federelement beziehungsweise durch mindestens zwei im Abstand zueinander angeordnete und mit dem Verschlusselement in Eingriff bringbare Anpressglieder gegen die Dichtfläche der Abdeckplatte drückbar ist.

Die erfindungsgemässe Einrichtung gewährleistet bei einem zum Fördern des pulverförmigen Materials zusätzlich mit Druckluft beaufschlagten Vorratsbehälter ein einwandfreies Verschliessen sowie eine exakte Abdichtung des mit der Anlagefläche versehenen Verschlusselements in Bezug auf die an der zugeordneten Abdeckplatte vorgesehene Dichtfläche, wobei infolge der zusätzlich an dem Verschlusselement wirkenden kraft die Dichtwirkung noch erhöht wird.

Bei einer weiteren Ausgestaltung ist das Verschlusselement zusätzlich um eine vertikale Achse drehbar an dem Tragarm gelagert, so dass bei der in Richtung der Dichtfläche orientierten Schwenkbewegung des Verschlusselements die daran angeordnete Anlagefläche relativ zu der Dichtfläche in horizontaler Ebene drehbar ist und mit variabler Stellung gegen die Dichtfläche gedrückt und infolge davon eine weitgehend gleichmässige Abnutzung sowie eine wesentlich längere Betriebszeit erreicht wird.

Weiterhin ist es vorteilhaft, dass in die Eintrittsöffnung der Abdeckplatte ein mit der Dichtfläche versehener Dichtring angeordnet ist, welcher vorzugsweise in eine in Bezug auf die Eintrittsöffnung absetzt ausgebildete Ausnehmung auswechselbar eingesetzt und befestigt wird.

Weitere Merkmale und Vorteile sowie Einzelheiten der Erfindung ergeben sich aus der nachstehenden Beschreibung in Verbindung mit den Patentansprüchen und der Zeichnung.

Ausführungsbeispiele der Erfindung werden nachstehend anhand der Zeichnung im einzelnen beschrieben. Es zeigt:
- **Fig.1**: eine schematisch dargestellte Einrichtung zum pneumatischen Fördern pulverförmiger oder körniger Materialien von einem mit einer Absperrvorrichtung versehenen Vorratsbehälter zu einem damit über eine Förderleitung verbundenen Silobehälter;
- **Fig.2**: ein in Draufsicht sowie in grösserem Massstab dargestelltes Teilstück des Vorratsbehälters mit der in bezug auf eine Eintrittsöffnung in geöffneter Stellung dargestellten und mit einer Schwenkvorrichtung wirkverbundenen Absperrvorrichtung;
- **Fig.3**: ein zweites Ausführungsbeispiel der Einrichtung gemäss Fig.1 mit dem Vorratsbehälter und daran angeordneter Schwenkvorrichtung für die Absperrvorrichtung;
- **Fig.4**: ein in Draufsicht sowie in grösserem Massstab dargestelltes Teilstück des Vorratsbehalters mit der Schwenkvorrichtung und der in bezug auf die Eintrittsöffnung in geschlossener Stellung dargestellten Absperrvorrichtung;
- **Fig.5**: ein in grösserem Massstab und teilweise im Schnitt dargestelltes erstes Ausführungsbeispiel der schwenk- und der Absperrvorrichtung für den Vorratsbehälter gemäss Fig.1 und Fig.3;
- **Fig.6**: ein in grösserem Massstab und teilweise im Schnitt dargestelltes zweites Ausführungsbeispiel der Schwenk- und der Absperrvorrichtung für den Vorratsbehälter gemäss Fig.1 und Fig.3;
- **Fig.7**: eine gemäss Pfeilrichtung VII in Fig.6 in schematischer Draufsicht dargestellte Abdeckplatte mit der daran angeordneten Absperrvorrichtung; und
- **Fig.8**: ein in grösserem Massstab und teilweise im Schnitt dargestelltes drittes Ausführungsbeispiel der Schwenk- und der Absperrvorrichtung für den Vorratsbehälter gemäss Fig.1 und Fig.3.

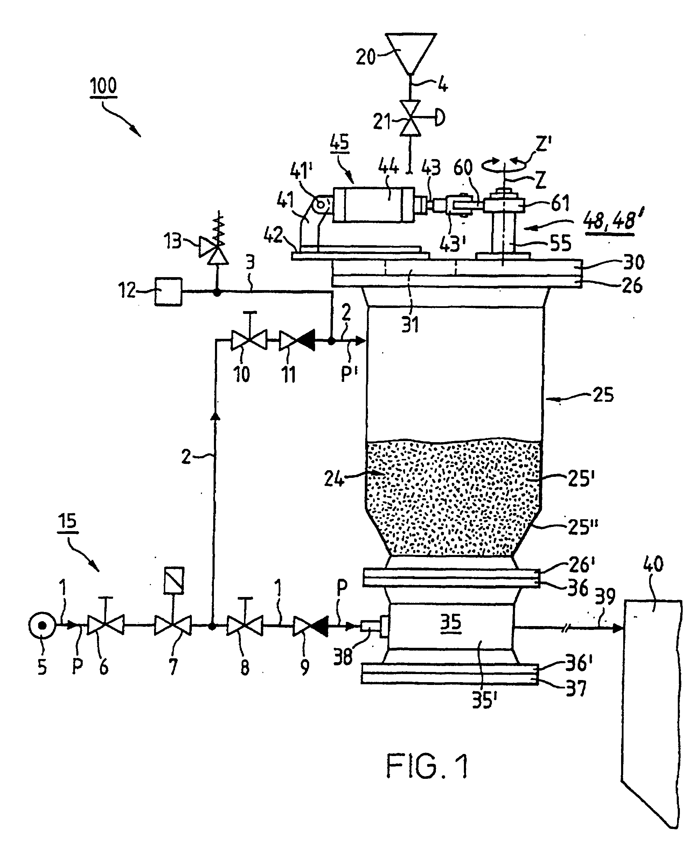

Fig.1 zeigt als erstes Ausführungsbeispiel eine schematisch dargestellte und zum pneumatischen Fördern pulverförmiger oder körniger Materialien ausgebildete Einrichtung 100. Die Einrichtung 100 umfasst einen Vorratsbehälter 25 mit zugeordnetem Leitungssystem 15 sowie eine an dem Vorratsbehälter 25 angeordnete und mit einer zugeordneten Betätigungseinheit 45 wirkverbundene Schwenkvorrichtung 48 für eine damit wirkverbundene Absperrvorrichtung 50.

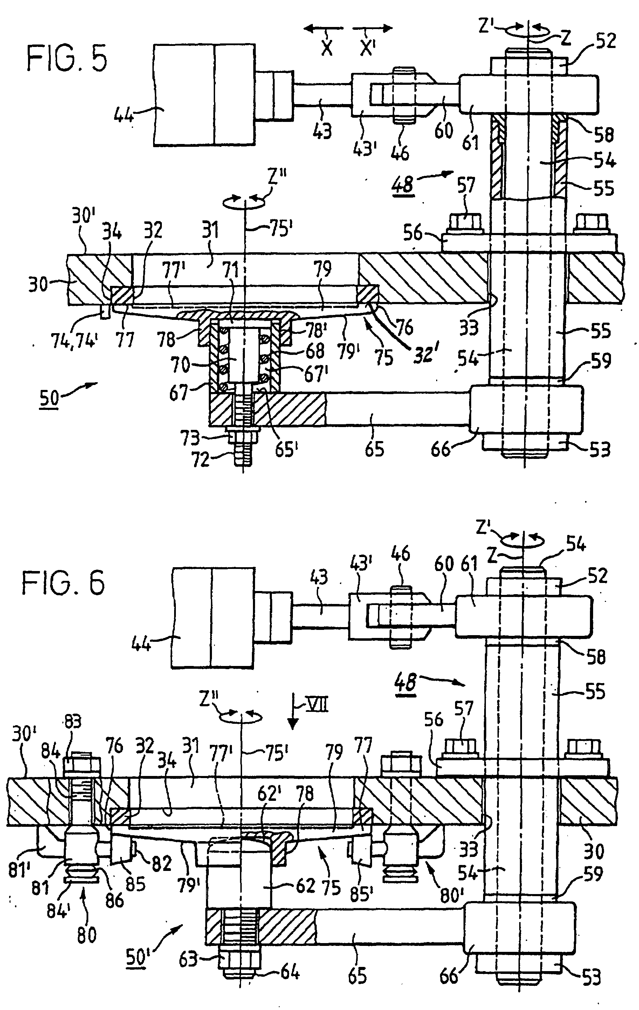

Der Vorratsbehälter 25 ist weiterhin über eine Leitung 4 unter Zwischenschaltung eines Einlaufschiebers 21 mit einem schematisch dargestellten Einfüllbehälter 20 verbunden, von welchem bei geöffneter Absperrvorrichtung (Fig. 5 bis 8) das Material 24 dem mit Druckluft beaufschlagten Innenraum 25' des Vorratsbehälters 25 zuführbar ist. Im unteren Bereich des Vorratsbehälters 25 ist eine mit dem Leitungssystem 15 in Verbindung stehende Auslaufeinheit 35 angeordnet, welche über eine daran angeschlossene Förderleitung 39 zum transportieren des druckluftbeaufschlagten Materials mit einem im Abstand zu dem Vorratsbehälter 25 angeordneten Silobehälter 40 verbunden ist.

Bei dem in Fig.1 dargestellten Ausführungsbeispiel umfasst das Leitungssystem 15 im wesentlichen eine an eine Druckquelle 5 angeschlossene erste Versorgungsleitung 1, welche unter Zwischenschaltung eines ersten Absperrventils 6, eines Elektroventils 7, eines zweiten Absperrventils 8 und eines Rückschlagventils 9 für die Zuführung der Fluidisierluft (Druckluft P) an mindestens ein Düsenelement 38 der Auslaufeinheit 35 angeschlossen ist. Zwischen dem Elektroventil 7 und dem zweiten Absperrventil 8 ist an die erste Versorgungsleitung 1 eine zweite Versorgungsleitung 2 angeschlossen, welche unter Zwischenschaltung eines weiteren Absperrventils 10 und eines Rückschlagventils 11 für die Zuführung der Förderluft (Druckluft P') im oberen Bereich an den Vorratsbehälter 25 angeschlossen ist. An die zweite Versorgungsleitung 2 ist eine mit einem Druckmessgerät 12 und einem Sicherheitsventil 13 in Verbindung stehende dritte Leitung 3 angeschlossen.

Der in Fig.1 als Ausführungsbeispiel dargestellte und nachstehend generell als Behälter 25 bezeichnete vorratsbehälter ist am oberen und unteren Ende jeweils mit einem Flansch 26 und 26' versehen. An dem oberen Flansch 26 ist eine analog ausgebildete Abdeckplatte 30 angeordnet, welche mit nicht dargestellten Mitteln, beispielsweise durch eine Schraubverbindung am oberen Flansch 26 befestigt ist. An der für das dem Behälter 25 zuführbare Material mit einer entsprechend ausgebildeten Eintrittsöffnung 31 versehenen Abdeckplatte 30 ist die mit der Betätigungseinheit 45 wirkverbundene Schwenkvorrichtung 48 angeordnet. Die mittels einer Tragplatte 42 an der Abdeckplatte 30 angeordnete und befestigte Betätigungseinheit 45 umfasst einen pneumatisch oder hydraulisch oder aber elektrisch betätigbaren Antrieb 44. Der Antrieb 44 ist an dem einen Ende mittels einer Kolbenstange 43 und daran angeordnetem Gabelstück 43' mit der an der Abdeckplatte 30 angeordneten Schwenkvorrichtung 48 wirkverbunden. Mit dem anderen Ende ist der Antrieb 44 über einen Bolzen 41' an einem an der Tragplatte 42 abgestützten und befestigten Lagerbock 41 angelenkt und gelagert. Die Abdeckplatte 30 ist weiterhin mit der mit dem Innenraum 25' des Behälters 25 in Verbindung stehenden Eintrittsöffnung 31 versehen, an welche die unter Zwischenschaltung des Einlaufschiebers 21 mit dem Einfüllbehälter 20 in Verbindung stehende Leitung 4 in nicht näher dargestellter Weise, beispielsweise durch einen Flansch oder dergleichen angeschlossen ist.

Die mit der vorzugsweise pneumatisch aktivierbaren Betätigungseinheit 45 beziehungsweise mit dem Antrieb 44 in Wirkverbindung stehende Schwenk vorrichtung 48 sowie. Ausgestaltungen und Varianten der damit wirkverbundenen Absperrvorrichtung werden später in Verbindung mit den Figuren 5 bis 8 im einzelnen beschrieben.

An dem unteren Flansch 26' des Behälters 25 ist die mit einem ersten Flansch 36 versehene Auslaufeinheit 35 angeordnet, welche vorzugsweise durch mehrere in Umfangsrichtung verteilt zueinander angeordnete Schrauben (nicht dargestellt) an dem Behälter 25 befestigt ist. Die Auslaufeinheit 35 weist einen in parallelem Abstand zu dem ersten Flansch 36 angeordneten zweiten Flansch 36' auf, an welchem ein durch mehrere in Umfangsrichtung verteilt zueinander angeordneten Schrauben (nicht dargestellt) befestigter Verschluss- oder Blindflansch 37 angeordnet ist. Die Auslaufeinheit 35 steht an der einen Seite, wie in Fig.1 dargestellt, über ein Düsenelement 38 oder mehrere Düsenelemente 38 mit der ersten Versorgungsleitung 1 und an der gegenüberliegenden Seite über die Förderleitung 39 mit dem Silobehälter 40 in Verbindung.

Bei einer nicht dargestellten Variante besteht die Möglichkeit, dass das zylindrische Teilstück 35' der Auslaufeinheit 35 direkt an dem konisch verjüngend ausgebildeten Teilstück 25" des Behälters 25 angeordnet beziehungsweise angeformt ist.

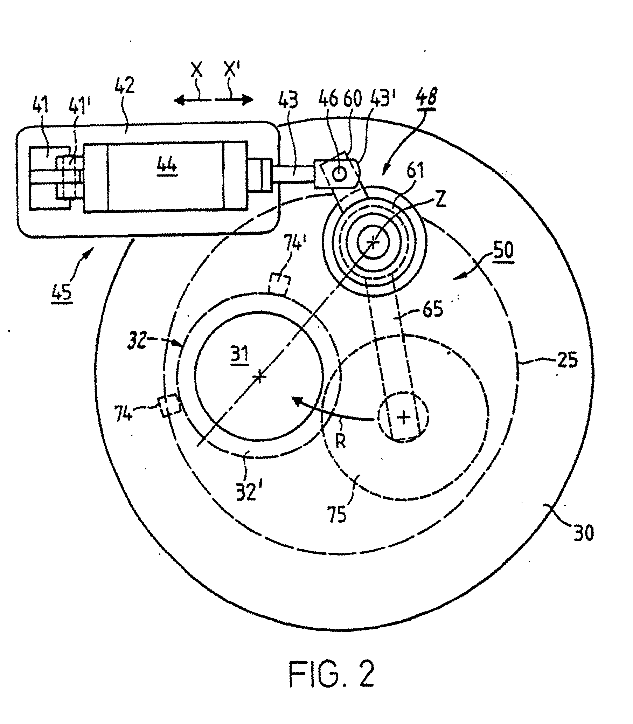

Fig.2 zeigt ein Teilstück des in Draufsicht sowie in grösserem Massstab dargestellten Behälters 25 sowie die daran angeordnete und mit der Eintrittsöffnung 31 versehene Abdeckplatte 30. Weiterhin erkennt man die mittels der Tragplatte 42 an der Abdeckplatte 30 angeordnete Betätigungseinheit 45 mit dem pneumatisch oder hydraulisch beziehungsweise elektrisch betätigbaren Antrieb 44. Der mit dem einen Ende an dem Lagerbock 41 abgestützte Antrieb 44 umfasst die je nach Druckbeaufschlagung in Pfeilrichtung X oder X' verschiebbare Kolbenstange 43, welche mit dem daran angeordneten Gabelstück 43' und einem Bolzen 46 mit einem an einer ersten Scheibe 61 angeordneten Hebelarm 60 der Schwenkvorrichtung 48 wirkverbunden ist. Die in Fig.2 schematisch dargestellte Absperrvorrichtung 50 umfasst weiterhin ein an einem Tragarm 65 angeordnetes und etwa scheibenförmig ausgebildetes Verschlusselement 75, welches infolge der in Pfeilrichtung X orientierten Zugbewegung der Kolbenstange 43 relativ zu der Eintrittsöffnung 31 bewegt und in geöffneter Position dargestellt ist (Fig.2). Durch eine in Pfeilrichtung X' orientierte Schubbewegung der Kolbenstange 43 wird das am Tragarm 65 angeordnete Verschlusselement 75 durch eine um die vertikale Achse Z in horizontaler Ebene orientierte Schwenkbewegung gemäss Pfeilrichtung R (Fig.2) bei gleichzeitiger Unterbrechung des nicht dargestellten Materialstroms mit der Eintrittsöffnung 31 beziehungsweise mit der Kreisringförmigen Dichtfläche 32' eines Dichtrings 32 abdichtend in Eingriff gebracht.

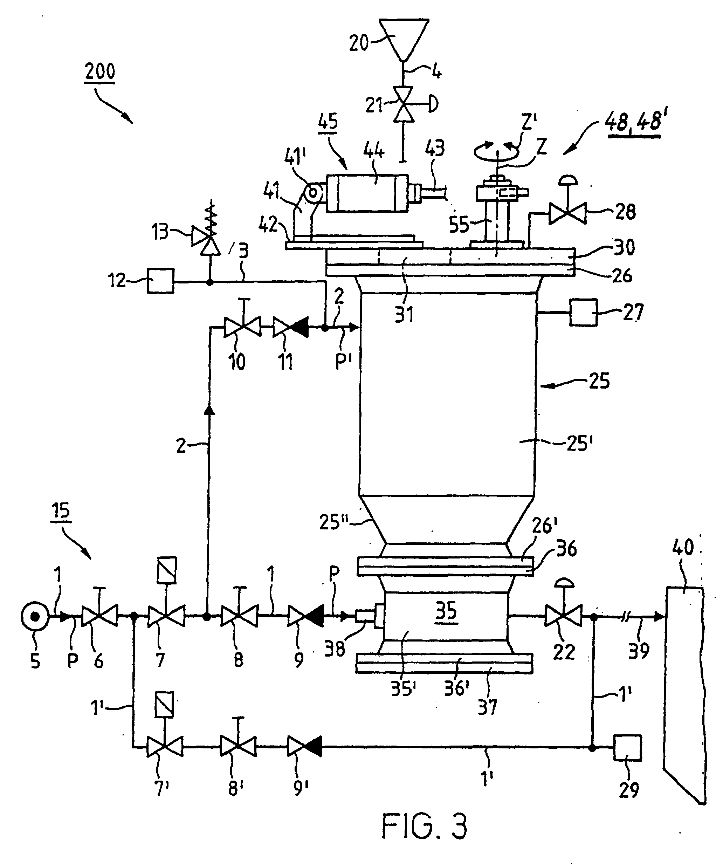

Fig.3 zeigt als zweites Ausführungsbeispiel eine schematisch dargestellte und zum pneumatischen Fördern pulverförmiger oder körniger Materialien ausgebildete Einrichtung 200, welche im wesentlichen analog der vorstehend in Verbindung mit Fig.1 beschriebenen Einrichtung 100 ausgebildet ist. Abweichend von der Einrichtung 100 ist bei der Einrichtung 200 an der Abdeckplatte 30 zusätzlich ein Entlüftungs- bzw. Entstaubungsventil 28 sowie im oberen Bereich des Behälters 25 ein Niveau-Überwachungsgerät 27 angeordnet. An der ersten Versorgungsleitung 1 des Leitungssystems 15 ist zwischen dem ersten Absperrventil 6 und dem Elektroventil 7 eine Leitung 1' angeschlossen, welche unter Zwischenschaltung eines zweiten Elektroventils 7', eines Absperrventils 8' und eines Rückschlagventils 9' an die mit dem Silobehälter 40 in Verbindung stehende Förderleitung 39 angeschlossen ist. Zwischen der Auslaufeinheit 35 und dem Silobehälter 40 ist in der Förderleitung 39 ein Auslaufschieber 22 angeordnet. Weiterhin ist an die Leitung 1' ein Druckmessgerät 29 angeschlossen.

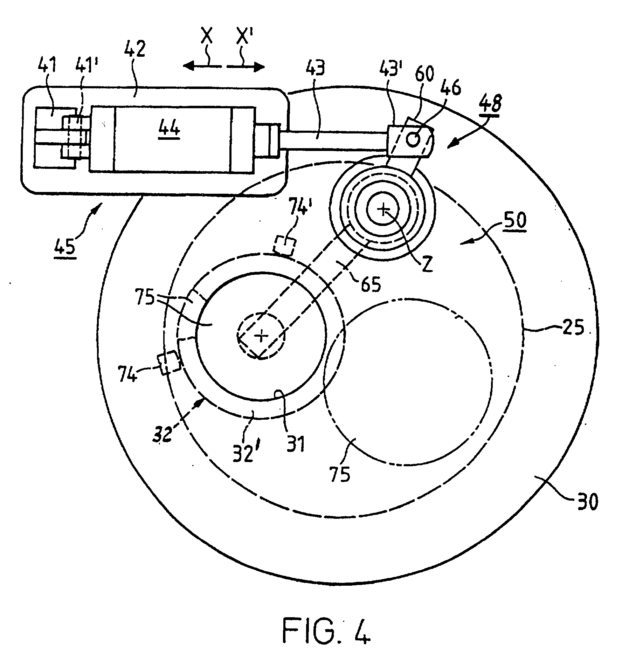

Fig.4 zeigt analog Fig.2 ein Teilstück des in Draufsicht sowie in grösserem Massstab dargestellten Behälters 25 sowie die daran angeordnete und mit der Eintrittsöffnung 31 versehene Abdeckplatte 30 und die daran angeordnete Betätigungseinheit 45 mit der Schwenkvorrichtung 48 sowie die wesentlichen Elemente 60, 65 und 75 der Absperrvorrichtung 50. Abweichend von Fig.2 ist in Fig.4 die teilweise dargestellte Kolbenstange 43 des Antriebs 44 in Pfeilrichtung X' geschoben, wodurch gleichzeitig der Tragarm 65 mit dem Verschlusselement 75 um die vertikale Achse Z in horizontaler Ebene verschwenkt und mit der Eintrittsöffnung 31 und dem Dichtring 32 abdichtend in Eingriff gebracht wurde.

An dieser Stelle wird darauf hingewiesen, dass an der Innenseite 30" (Fig.5) der Abdeckplatte 30 im Bereich der Eintrittsöffnung 31 wie in Fig.2 und Fig.4 schematisch dargestellt, mindestens ein, vorzugsweise aber zwei im Abstand zueinander angeordnete Anschläge 74 und 74' angeordnet werden können, durch welche das Einschwenken des Verschlusselements 75 exakt auf die Eintrittsöffnung 31 abgestimmt und eingestellt werden kann.

In Fig.5 ist als erstes Ausführungsbeispiel die an der Abdeckplatte 30 angeordnete und teilweise im Schnitt sowie in grösserem Massstab dargestellte und mit der Schwenkvorrichtung 48 wirkverbundene Absperrvorrichtung 50 dargestellt. Die Abdeckplatte 30 ist mit einer im Abstand zu der Eintrittsöffnung 31 angeordneten Öffnung 33 versehen, welche zur Aufnahmeeines die Abdeckplatte 30 durchdringenden Führungsrohres 55 der Schwenkvorrichtung 48 ausgebildet ist. Das Führungsrohr 55 ist mit einem daran angeordneten und befestigten Flansch 56 an der Abdeckplatte 30 abgestützt und durch Schrauben 57 befestigt. Am oberen und unteren Ende des Führungsrohres 55 ist jeweils eine koaxial darin gelagerte Führungsbuchse 58 und 59 angeordnet. In den beiden Führungsbuchsen 58,59 ist ein das Führungsrohr 55 in axialer Richtung durchdringender Achskörper 54 gelagert. Am oberen Ende des Achskörpers 54 ist die erste Scheibe 61 angeordnet, welche über den daran befestigten Hebelarm 60 und dem Bolzen 46 mit dem an der Kolbenstange 43 des Antriebs 44 befestigten Gabelstück 43' wirkverbunden ist. Die Scheibe 61 ist durch ein erstes Sicherungselement 52 an dem Achskörper 54 gehalten sowie durch nicht dargestellte Mittel, beispielsweise durch eine Verzahnung oder durch eine Keilverbindung, mit dem Achskörper 54 um dessen senkrechte Achse Z drehfest wirkverbunden. Bei entsprechender Ansteuerung des Antriebs 44 wird die Kolbenstange 43 in Pfeilrichtung X oder X' bewegt und dabei der damit wirkverbundene Hebelarm 60 mit der Scheibe 61 zusammen mit dem Achskörper 54 um die theoretische senkrechte Achse Z desselben in Pfeilrichtung z' gedreht.

Wie in Fig.5 weiterhin dargestellt ist die Absperrvorrichtung 50 an dem in den Innenraum 25' des Behälters 25 (Fig.1,3) ragenden Ende des Achskörpers 54 mit einer zweiten Scheibe 66 versehen. An der zweiten Scheibe 66 ist der Tragarm 65 für das Verschlusselement 75 mit nicht näher dargestellten Mitteln befestigt. Die zweite Scheibe 66 ist durch ein zweites sicherungselement 53 an dem Achskörper 54 gehalten sowie durch nicht dargestellte Mittel, beispielsweise in Form einer Verzahnung oder einer Keilverbindung mit dem Achskörper 54 drehfest wirkverbunden. Bei der um die senkrechte Achse Z in Pfeilrichtung Z' orientierten Drehbewegung des Achskörpers 54 wird der Tragarm 65 mit dem daran angeordneten Verschlusselement 75 derart in horizontaler Ebene verschwenkt, dass dieses entweder schliessend mit der Eintrittsöffnung 31 in Eingriff (Fig.4) oder umgekehrt öffnend ausser Eingriff (Fig.2) der Eintrittsöffnung 31 gebracht wird. Bei einem bevorzugten Ausführungsbeispiel ist in der Abdeckplatte 30 koaxial zu der Eintrittsöffnung 31 der mit der Dichfläche 32' versehene Dichtring 32 angeordnet, welcher in einer entsprechend dem Profilquerschnitt des Dichtrings 32 ausgebildeten Ausnehmung 34 angeordnet und mit nicht dargestellten Mitteln an der Abdeckplatte 30 befestigt ist.

Die Befestigung des Dichtrings 32 kann durch Einpressen (Presssitz) oder mittels eines Aussengewindes in die mit einem entsprechenden Innengewinde (nicht dargestellt) versehene Abdeckplatte 30 eingeschraubt werden. Die Befestigung des Dichtrings 32 kann jedoch auch durch mehrere in Umfangsrichtung verteilte und vorzugsweise von der Oberseite 30' gesehenen die Abdeckplatte 30 durchdringende Schrauben (nicht dargestellt) erreicht werden. Diese Variante hat den Vorteil, dass der Dichtring 32 problemlos ausgewechselt werden kann. Der Dichtring 32 ist vorzugsweise aus gehärtetem Stahl oder aber aus nichtrostendem Stahl hergestellt. Bei einer weiteren Variante besteht jedoch auch die Möglichkeit, dass an der Innenseite 30" der Abdeckplatte 30 eine kreisringförmige Anlage-und Dichtfläche (nicht dargestellt) angeschliffen ist, welche zur abdichtenden Anlage mit einer analog kreisringförmig ausgebildeten Anlagefläche 77 des Verschlusselements 75 ausgebildet ist.

Am äusseren Ende des Tragarms 65 ist, wie in Fig.5 teilweise im Schnitt dargestellt, ein rohrförmiger Stutzen 67 angeordnet und mit nicht und mit nicht dargestellten Mitteln befestigt. An dem Stutzen 67 ist das Verschlusselement 75 gelagert, welches ein mit einer entsprechend ausgebildeten Ausnehmung 78' versehenes Lagerteil 78 aufweist. Im Innenraum 67' des rohrförmigen Stutzens 67 ist ein Federelement, vorzugsweise eine Schraubenfeder 68 sowie ein damit wirkverbundener Stössel 70 angeordnet. Der Stössel 70 ist an dem einen Ende mit einem Anlageflansch 71 für die Schraubenfeder 68 und an dem anderen Ende mit einem den Tragarm 65 durchdringenden Gewindestück 72 versehen. Durch eine am Gewindestück 72 angeordnete Mutter 73 ist die einerseits an der Fläche 65' des Tragarms 65 und andererseits am Anlageflansch 71 und somit auch am Verschlusselement 75 wirkende Rückstellkraft der Schraubenfeder 68 einstellbar.

Das im wesentlichen als kreisförmige Platte ausgebildete Verschlusselement 75 hat, wie in Fig.5 dargestellt, eine zirkuläre Seitenwand 76 sowie einen Boden 79, welcher an der der Abdeckplatte 30 beziehungsweise dem Dichtring 32 oder der angeschliffenen, kreisringförmigen Dichtfläche 32' zugewandten Seite die kreisringförmige Anlagefläche 77 sowie eine daran anschliessende Vertiefung 77' aufweist. An der anderen, gegenüberliegenden Seite ist der teilweise im Schnitt dargestellte Boden 79 ausgehend von der zirkulären Seitenwand 76 in Richtung des im Zentrum des Verschlusselements 75 angeordneten und mit der Ausnehmung 78' versehenen Lagerteils 78 vorzugsweise als geneigte kreisförmige Lauffläche 79' ausgebildet. Das Verschlusselement 75 ist vorzugsweise derart an dem Anlageflansch 71 des Stössels 70 beziehungsweise an dem Lagerteil 78 gelagert, dass eine um die theoretische Achse 75' relativ zu dem Stutzen 67 beziehungsweise zu dem Tragarm 65 in Pfeilrichtung Z" orientierte Drehbewegung des Verschlusselements 75 erreichbar ist.

Fig.6 zeigt als zweites Ausführungsbeispiel eine mit 50' bezeichnete Absperrvorrichtung, welche im wesentlichen analog der vorstehend in Verbindung mit Fig.5 beschriebenen Absperrvorrichtung 50 ausgebildet ist und man erkennt das an der Abdeckplatte 30 befestigte Führungsrohr 55 mit dem koaxial darin gelagerten und durch die Elemente 52 und 54 gesicherten Achskörper 54. Am oberen Ende ist der Achskörper 54 mittels der Teile 60,61, 43,43' und 46 mit dem Antrieb 44 und am unteren Ende über die Scheibe 66 mit dem für das Verschlusselement 75 ausgebildeten Tragarm 65 wirkverbunden. Bei dieser Variante ist an dem einen Ende des Tragarms 65 ein zur Lagerung, vorzugsweise ein zur punktförmigen Auflage des Verschlusselementes 75 ausgebildetes Kopfstück 62 angeordnet. Das Kopfstück 62 ist beispielsweise mit einer ebenen oder bombierten Auflagefläche 62' versehen in dem Lagerteil 78 des Verschlusselements 75 angeordnet und durch einen Gewindebolzen 64 und Mutter 63 an dem Tragarm 65 befestigt. Das in Fig.6 dargestellte Verschlusselement 75 ist ebenfalls um die Achse 75' relativ zu dem Kopfstück 62 in Pfeilrichtung Z" drehbar.

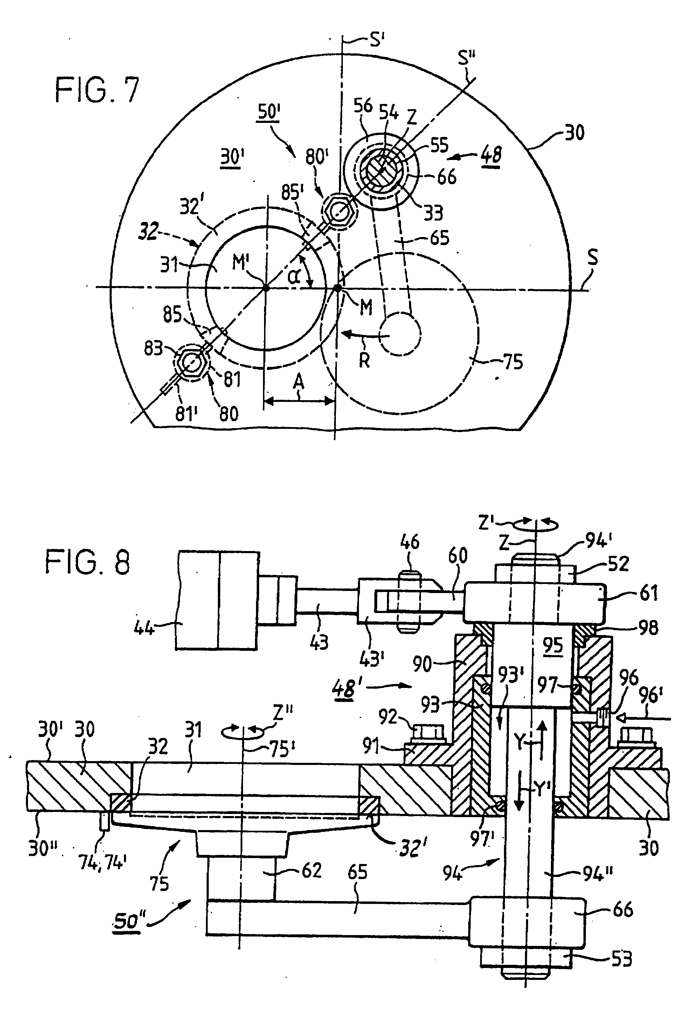

Abweichend von der Absperrvorrichtung 50 gemäss Fig.5 wird bei der Absperrvorrichtung 50' gemäss Fig.6 das Verschlusselement 75 mittels an der Abdeckplatte 30 befestigter Anpressglieder 80 und 80' mit dem koaxial in der Eintrittsöffnung 31 angeordneten und mit der Dichtfläche 32' versehenen Dichtring 32 abdichtend in Eingriff gebracht. Das einzelne Anpressglied 80 oder 80' umfasst ein Gehäuse 81, welches mittels eines Gewindebolzens 84 und einer Gewindemutter 83 an der Abdeckplatte 30 angeordnet und befestigt ist. An dem in nicht dargestellter Weise unten aus dem Gehäuse 81 herausragenden Ende des Gewindebolzens 84 ist ein Federelement, vorzugsweise ein Tellerfederpaket 86 angeordnet und an einem Anlageflansch 84' des Gewindebolzens 84 abgestützt. An dem Gehäuse 81 ist auf der einen Seite in nicht dargestellter Weise ein Lagerzapfen 82 und an der anderen Seite ein Stützglied 81' angeordnet und befestigt. An dem Lagerzapfen 82 ist eine um dessen nicht bezeichnete Achse drehbare Andrückrolle 85 angeordnet. Die Andrückrolle 85 hat eine konisch verjüngend ausgebildete Auflauffläche (nicht bezeichnet), welche vorzugsweise analog der entsprechend schrägen Fläche 79' des Verschlusselements 75 ausgebildet ist. Die diametral zueinander an der Abdeckplatte 30 angeordneten und befestigten Anpressglieder 80 und 80' wirken im wesentlichen als Auflaufkufe für das relativ zu Eintrittsöffnung 31 schwenkbare Verschlusselement 75 (Fig.7). Mittels des einzelnen Gewindebolzens 84 kann das Federpaket 86 beliebig vorgespannt und somit die an der schrägen Fläche 79' des Verschlusselements 75 und somit an der Abdeckplatte 30 beziehungsweise am Dichtring 32 wirkende Anpresskraft der Andrückrolle 85 oder 85' eingestellt werden.

In Fig.7 ist die Absperrvorrichtung 50' gemäss Pfeilrichtung VII in Fig.6 in schematischer Draufsicht sowie die Anordnung der einzelnen Elemente dargestellt und man erkennt die kreisförmige Abdeckplatte 30 mit der auf der ersten theoretischen Symmetrieachse S angeordneten Eintrittsöffnung 31. Die Eintrittöffnung 31 ist im Abstand A zu der auf der zweiten theoretischen Symmetrieachse S' angeordneten Mitte M der Abdeckplatte 30 angeordnet, wobei der Abstand A zwischen den beiden Mittelpunkten M und M' beispielsweise grösser als die Hälfte der Durchtrittsöffnung 31 gewählt ist. Weiterhin erkennt man die theoretische Achse Z für den koaxial in dem Führungsrohr 55 gelagerten und orthogonal zu der Oberfläche 30' der Abdeckplatte 30 angeordneten Achskörper 54. Ausgehend von der Mitte 54. Ausgehend von der M' der Eintrittsöffnung 31 ist im Abstand dazu auf einer theoretischen Verbindungslinie S" die Öffnung 33 für das Führungsrohr 55 der Schwenkvorrichtung 48 angeordnet. Die Verbindungslinie S" ist in bezug auf die erste theoretische Symmetrieachse S unter spitzem Winkel α angeordnet. Der Winkel α liegt etwa in der Grössenordnung zwischen 40° und 50°, vorzugsweise bei 45°. Weiterhin erkennt man in Fig.7 die beiden diametral zueinander auf der Verbindungslinie S" angeordneten Anpressglieder 80 und 80' mit den Andrückrollen 85 und 85', welche beim Einschwenken des Verschlusselements 75 gemäss Pfeilrichtung R (Fig.2 und Fig.7) jeweils als sogenannte Auflaufkufe wirken und ein Anpressen des Verschlusselements 75 an den Dichtring 32 beziehungsweise an die zugewandte Seite 30" der Abdeckplatte 30 bewirken.

Fig.8 zeigt als drittes Ausführungsbeispiel eine Absperrvorrichtung 50" sowie eine Variante der damit wirkverbundenen und im Schnitt dargestellten Schwenkvorrichtung 48'. Die Absperrvorrichtung 50" ist, im wesentlichen analog der vorstehend in Verbindung mit Fig.5 beschriebenen Absperrvorrichtung 50 ausgebildet. Abweichend davon ist bei der Schwenkvorrichtung 48' gemäss Fig.8 an der Abdeckplatte 30 ein zur koaxialen Aufnahme einer Zylinderhülse 93 ausgebildetes Gehäuse 90 angeordnet. Das Gehäuse 90 ist über einen daran angeformten Flansch 91 und Schrauben 92 an der Oberfläche 30' der Abdeckplatte 30 befestigt. Die in dem Gehäuse 90 angeordnete und mit nicht dargestellten Mitteln darin befestigte Zylinderhülse 93 hat eine zur Lagerung eines Achskörpers 94 ausgebildete Druckkammer 93'. Der Achskörper 94 hat ein erstes Teilstück 94', ein daran angeformtes und als Kolben ausgebildetes zweites Teilstück 95 sowie ein daran angeformtes drittes Teilstück 94". Der Achskörper 94 ist mit dem zweiten Teilstück 95 und zugeordneter Dichtung 97 sowie mit dem dritten Teilstück 94" und zugeordneter Dichtung 97' in bezug auf die Druckkammer 93' abgedichtet. Das zweite, als Kolben ausgebildete Teilstück 95 des Achskörpers 94 ist in der Druckkammer 93' entsprechend beaufschlagbar, wodurch eine in Pfeilrichtung Y orientierte, geringfügige Hubbewegung von etwa 0,5 mm bis 1 mm des Achskörpers 94 und der damit wirkverbundenen Elemente 66,65 und 61,60,43',43 und somit eine abdichtende Anlage des Verschlusselements 75 am Dichtring 32 erreicht wird. Die durch eine entsprechende Druckbeaufschlagung des kolbenförmigen Teilstücks 95 erreichbare Hubbewegung ist so gewählt, dass der am Lagerbock 41 angelenkte Antrieb 44 geringfügig um den Bolzen 41' geschwenkt und bei Druckentlastung selbsttätig wieder in Pfeilrichtung Y' zurückgeführt wird und infolge davon das Verschlusselement 75 nicht mehr gegen den Dichtring 32 gepresst wird. Zur Erreichung der Druckbeaufschlagung des kolbenförmigen Teilstücks 95 ist die Druckkammer 93' über eine die Zylinderhülse 93 sowie das Gehäuse 90 durchdringenden Öffnung 96 mit einer nicht dargestellten Druckquelle, vorzugsweise aber mit der Druckquelle 5 gemäss Fig.1 oder Fig.3 verbunden und gemäss Pfeilrichtung 96' entsprechend beaufschlagbar (Fig.8).

Die Druckbeaufschlagung des kolbenförmigen Teilstücks 95 in der Druckkammer 93' ist mit nicht dargestellten Mitteln vorzugsweise derart steuerbar, dass das am Tragarm 65 angeordnete Verschlusselement 75 bei der in Richtung der Eintrittsöffnung 31 orientierten Schwenkbewegung R (Fig. 2) mit geringem Abstand zu der Innenseite 30" der Abdeckplatte 30 angeordnet ist und erst in der die Eintrittsöffnung 31 verschliessenden Phase mit erhöhter Druckbeaufschlagung des mit dem kolbenförmigen Teilstück 95 in der Zylinderhülse 93 angeordneten Achskörpers 94 abdichtend gegen den Dichtring 32 beziehungsweise gegen die kreisringförmige Dichtfläche 32' gepresst wird (Fig.8).

Am oberen Ende des Gehäuses 90 ist eine Führungsbuchse 98 angeordnet, an welcher die mit dem ersten Teilstück 94' ,des Achskörpers 94 in Wirkverbindung stehende und durch das Sicherungselement 52 gehaltene erste Scheibe 61 angeordnet ist. Die Scheibe 61 ist über den daran befestigten Hebelarm 60 und dem Bolzen 46 mit dem an der Kolbenstange 43 des Antriebs 44 befestigten Gabelstück 43' wirkverbunden. Am unteren Ende des zweiten Teilstücks 94" des Achskörpers 94 ist die mit dem zweiten Sicherungselement 53 gehaltene zweite Scheibe 66 angeordnet, mittels welcher der daran befestigte Tragarm 65 sowie das daran gelagerte Verschlusselement 75 in vorbestimmtem Bereich um die vertikale Achse Z des Achskörpers 94 in Pfeilrichtung Z' schwenkbar und mit der Eintrittsöffnung 31 in der Abdeckplatte 30 in oder ausser Eingriff bringbar ist.

An dieser Stelle wird darauf hingewiesen, dass die einzelne Absperrvorrichtung 50,50' oder 50" an der Innenseite 30" der Abdeckplatte 30 im Bereich der Eintrittsöffnung 31 mindestens einen Anschlag, vorzugsweise aber zwei in Umfangsrichtung der Eintrittsöffrung 31 im Abstand zueinander angeordnete Anschläge 74,74' aufweist (Fig.2). Mittels der Anschläge 74,74' kann die jeweils von der Schwenk vorrichtung 48 oder 48' bewirkte Einschwenkbewegung des Verschlusselements 75 begrenzt und exakt ausgerichtet mit der Eintrittsöffnung 31 und dem Dichtring 32 abdichtend in Eingriff gebracht Werden.

Die vorstehend in Verbindung mit den Figuren 5 bis 8 beschriebene Absperrvorrichtung 50,50' oder 50" sowie die damit wirkverbundene Schwenkvorrichtung 48 oder 48' sind nicht auf die beschriebenen Ausführungsbeispiele beschränkt, insbesondere nicht auf die in Fig.1 und Fig.2 dargestellten und mit einer Abdeckplatte 30 verschlossenen Behälter 25. Weitere zweckmässige Ausgestaltungen und Anordnungen der einzelnen Funktionselemente, ohne den Grundgedanken der Erfindung zu verlassen, sind ebenfalls möglich. Hierbei ist insbesondere auch an die Anordnung der Absperrvorrichtung 50, 50' oder 50'' und Schwenkvorrichtung 48 oder 48' an einem mit einem sogenannten Korbbogenboden versehenen Behälter gedacht.

## Patentansprüche

1. Einrichtung zum pneumatischen Fördern pulverförmiger oder körniger Materialien, bestehend aus einem mit einer Auslaufeinheit verbundenen Vorratsbehälter (25), einer eintrittsseitig daran angeordneten Abdeckplatte (30) und einer daran gelagerten Schwenkvorrichtung (48;48') für ein in dem Behälter-Innenraum (25') an einem Tragarm (65) gelagertes Verschlusselement (75), welches mittels der Schwenkvorrichtung um die vertikale Achse (Z) eines Achskörpers (54;94) etwa in horizontaler Ebene relativ zu einer in der Abdeckplatte (30) vorgesehenen Eintrittsöffnung (31) schwenkbar und bei gleichzeitiger Unterbrechung des Materialstroms schliessend damit in Eingriff oder zum Beschicken des Vorratsbehälters (25) öffnend ausser Eingriff bringbar ist, **gekennzeichnet durch** eine an dem Verschlusselement (75) an der der Abdeckplatte (30) zugewandten Seite angeordnete kreisringförmige Anlagefläche (77), welche bei der Schwenkbewegung des Verschlusselements (75) mit einer in Umfangsrichtung der Eintrittsöffnung (31) zugeordneten kreisringförmigen Dichtfläche (32') abdichtend in Eingriff bringbar ist, wobei das Verschlusselement (75) zusätzlich **durch** ein an dem Tragarm (65) abgestütztes Federelement beziehungsweise **durch** mindestens zwei im Abstand zueinander angeordnete und mit dem Verschlusselement (75) in Eingriff bringbare Anpressglieder (80,80') gegen die Dichtfläche (32') der Abdeckplatte (30) drückbar ist.

2. Einrichtung nach Anspruch 1, **dadurch gekennzeichnet, dass** das etwa scheibenförmig ausgebildete Verschlusselement (75) an einem an dem Tragarm (65) angeordneten rohrförmigen Stutzen (67) gelagert und infolge der einstellbaren Rückstellkraft einer darin angeordneten und an dem Tragarm (65) abgestützten Schraubenfeder (68) gegen die Dichtfläche (32') drückbar ist.

3. Einrichtung nach Anspruch 2, **gekennzeichnet durch** einen zusammen mit der Schraubenfeder (68) in dem rohrförmigen Stutzen (67) angeordneten Stössel (70), welcher an dem einen Ende mit einem Anlageflansch (71) zur Lagerung des Verschlusselements (75) und an dem anderen Ende mit einer Schraubverbindung (72,73) zum Einstellen der Rückstellkraft der Schraubenfeder (68) an dem Tragarm (65) angeordnet ist.

4. Einrichtung nach Anspruch 1, **dadurch gekennzeichnet, dass** das etwa scheibenförmig ausgebildete Verschlusselement (75) an einem an dem Tragarm (65) angeordneten und mit einer ebenen oder bombierten Anlagefläche (62') versehenen Kopfstück (62) gelagert und mittels mindestens zwei an der Innenseite (30") der Abdeckplatte (30) in Umfangsrichtung der Eintrittsöffnung (31) im Abstand zueinander angeordnete Anpressglieder (80,80') gegen die Dichtfläche (32') drückbar ist.

5. Einrichtung nach Anspruch 4, **dadurch gekennzeichnet, dass** die Anpressglieder (80,80') je eine als Auflaufkufe drehbar gelagerte Rolle (85,85') aufweisen, welche mit einer an der zugewandten Seite des Verschlusselements (75) angeordneten und vom Zentrum in Richtung der äusseren zirkulären Seitenwand (76) verjüngend ausgebildeten Lauffläche (79') in Eingriff bringbar sind.

6. Einrichtung nach einem der Ansprüche 4 und 5, **dadurch gekennzeichnet, dass** die Anpressglieder (80,80') jeweils mittels einer Schraubverbindung (83,84) auswechselbar und in Bezug auf die Eintrittsöffnung (31) gegenüberliegend zueinander an der Abdeckplatte (30) befestigt und die Rollen (85,85') je durch ein zugeordnetes Federelement (86) mit einstellbarem Anpressdruck gegen die geneigte Lauffläche (79') des Verschlusselements (75) drückbar sind.

7. Einrichtung nach Anspruch 1, **dadurch gekennzeichnet, dass** die kreisringförmige Dichtfläche (32') entweder an der zugewandten Innenseite (30") der Abdeckplatte (30) angeschliffen oder an einem in der Eintrittsöffnung (31) der Abdeckplatte (30) eingesetzten Dichtring (32) angeordnet ist.

8. Einrichtung nach Anspruch 7, **dadurch gekennzeichnet, dass** der Dichtring (32) auswechselbar in einer abgesetzt zu der Eintrittsöffnung (31) in der Abdeckplatte (30) angeordneten Ausnehmung (34) auswechselbar angeordnet ist.

9. Einrichtung nach einem der Ansprüche 7 oder 8, **dadurch gekennzeichnet, dass** der in die zirkuläre Ausnehmung (34) der Abdeckplatte (30) eingesetzte Dichtring (32) aus gehärtetem oder aus nichtrostendem Stahl hergestellt und mittels am Umfang verteilt angeordneter Schrauben auswechselbar befestigt ist.

10. Einrichtung nach einem der Ansprüche 1 bis 4, **dadurch gekennzeichnet, dass** das Verschlusselement (75) mit einem daran angeordneten und mit einer Ausnehmung (78') versehenen Lagerteil (78) an dem Stutzen (67) oder an dem Kopfstück (62) gelagert und relativ zu dem Tragarm (65) in horizontaler Ebene drehbar ist.

11. Einrichtung nach Anspruch 1, **dadurch gekennzeichnet, dass** der zur Lagerung des Tragarms (65) vorgesehene Achskörper (94) mit einem daran angeordneten kolbenförmigen Teilstück (95) in einem als Druckkammer ausgebildeten und an der Abdeckplatte (30) befestigten Gehäuse (90) gelagert ist, wobei das in horizontaler Ebene schwenkbare Verschlusselement (75) in der Schliessstellung infolge der Druckbeaufschlagung des kolbenförmigen Teilstücks (95) gegen die kreisringförmige Dichtfläche (32') drückbar ist.

12. Einrichtung nach Anspruch 11, **dadurch gekennzeichnet, dass** die Druckbeaufschlagung des in dem Gehäuse (90) angeordneten kolbenförmigen Teilstücks 95 derart steuerbar ist, dass der Tragarm (65) mit dem Verschlusselement (75) in geringem Abstand zu der Innenseite (30") der Abdeckplatte (30) in horizontaler Ebene schwenkbar und erst in der Schliessstellung durch Druckbeaufschlagung des kolbenförmigen Teilstücks (95) gegen die kreisringförmige Dichtfläche (32') drückbar ist.

13. Einrichtung nach Anspruch 1, **dadurch gekennzeichnet, dass** an der Innenseite (30") der Abdeckplatte (30) mindestens ein, vorzugsweise aber zwei oder mehrere am Umfang der Eintrittsöffnung (31) im Abstand zueinander angeordnete Anschläge (74,74') angeordnet sind, mittels welcher die Schwenkbewegung des Tragarms (65) mit dem Verschlusselement (75) in Bezug auf. die Eintrittsöffnung (31) begrenzt ist.

14. Einrichtung nach Anspruch 1, **dadurch gekennzeichnet, dass** die die Abdeckplatte (30) durchdringende Eintrittsöffnung (31) sowie die zugeordnete Dichtfläche (32') auf der theoretischen Symmetrieachse (S) der Abdeckplatte (30) angeordnet sind, wobei der Abstand (A) zwischen der Mitte (M) der Abdeckplatte (30) und der Mitte (M') der Eintrittsöffnung (31) grösser als der halbe Durchmesser derselben ausgebildet ist.

15. Einrichtung nach Anspruch 1, **dadurch gekennzeichnet, dass** die Schwenkvorrichtung (48;48') und die Eintrittsöffnung (31) im Abstand zueinander an der Abdeckplatte (30) angeordnet sind, wobei eine die Mitte (M') der Eintrittsöffnung (31) und die Achse (Z) der Schwenkvorrichtung (48;48') miteinander verbindende Bezugslinie (S") in Bezug auf die theoretische Symmetrieachse (S) der Abdeckplatte (30) unter spitzem Winkel (α) von etwa 45° angeordnet ist.

## Claims

1. A device for the pneumatic conveyance of powdery or granular materials, consisting of a store tank (25) connected with an outlet unit, a cover plate (30) arranged thereon on the inlet side and a swivelling apparatus (48; 48') held thereon for a locking element (75) held in the interior (25') of the tank on a supporting arm (65), which locking element is swivellable by means of the swivelling apparatus about the vertical axis (Z) of an axle body (54;94) approximately in a horizontal plane relative to an inlet (31) opening provided in the cover plate (30) and can be brought into engagement with the same by simultaneously shutting off the material flow or can be brought out of engagement in an opening fashion in order to allow charging the store tank, **characterized by** an annulus-shaped bearing surface (77) which is arranged on the locking element (75) facing the cover plate (30) and can be brought, during the swivelling movement of the locking element (75), sealingly into engagement with an annulus-shaped sealing surface (32') associated in the circumferential direction of the inlet opening (31), with the locking element (75) additionally being pressable against the sealing surface (32') of the cover plate (30) by means of a spring element resting on the supporting arm (65) or by at least two pressing members (80, 80') which are arranged at a distance from each other and can be brought into engagement with the locking element (75).

2. A device as claimed in claim 1, **characterized in that** the locking element (75) which is provided with an approximately disk-like arrangement is held on a tubular connection piece (67) arranged on the supporting arm (65) and can be pressed against the sealing surface (32') as a result of the adjestable restoring force of a helical spring (68) which is arranged therein and rests on the supporting arm (65).

3. A device as claimed in claim 2, **characterized by** a tappet (70) which is arranged together with the helical spring (68) in the tubular connection piece (67), which tapped (70) is provided at the one end with a bearing flange (71) for holding the locking element (75) and the other end with a threaded connection (72,73) for setting the restoring force of the helical spring (68) on the supporting arm (65).

4. A device as claimed in claim 1, **characterized in that** the approximately disk-like locking element (75) is held on a head piece (62) which is held on the supporting arm (65) and is provided with a plane or embossed bearing surface (62'), with the locking element being pressable by means of at least two pressing members (80,80') against the sealing surface (32'), which pressing members are arranged on the inside surface (30") of the cover plate (30) at a distance in the circumferential direction of the inlet opening (31).

5. A device as claimed in claim 4, **characterized in that** the pressing member (80,80') each comprise a rotatably held roller (85,85') which acts as a take-up runner and can be brought into engagement with a running surface (79') which is arranged on the facing side of the locking element (75) and is arranged in a tapering manner away from the centre in the direction towards the outer circular side wall (76).

6. A device as claimed in one of the claims 4 and 5, **characterized in that** the pressing members (80,80') are each exchangeable by means of a screwed connection (83,84) and are fastened to the cover plate (30) so as to face each other with respect to the inlet opening (31) and the rollers (85,85') can each be pressed by means of an associated spring element (86) with an adjustable pressing pressure against the inclined running surface (79') of the locking element (75).

7. A device as claimed in claim 1, **characterized in that** the annulus-shaped sealing surface (32') is either ground into the facing inside surface (30") of the cover plate (30) or is arranged on a sealing ring (32) inserted into the inlet opening (31) of the cover plate (30).

8. A device as claimed in claim 7, **characterized in that** the sealing ring (32) is arranged in an exchangeable fashion in the cover plate (30) in a recess (34) which is disposed in an offset manner to the inlet opening (31).

9. A device as claimed in one of the claims 7 or 8, **characterized in that** the sealing ring (32) which is inserted in a circular recess (34) of the cover plate (30) is made of hardened or stainless steel and is exchangeably fastened by means of screws which are distributed over the circumference.

10. A device as claimed in one of the claims 1 to 4, **characterized in that** the locking element (75) is held on the connection piece (67) or the head piece (62) by means of a bearing part (78) which is arranged thereon and is provided with a recess (78'), which locking element is rotatable relative to the supporting arm (65) in a horizontal plane.

11. A device as claimed in claim 1, **characterized in that** the axial body (94) provided for holding the supporting arm (65) is held with a piston-like section (95) arranged thereon in a housing (90) arranged as a pressure chamber and fastened to the cover plate (30), with the locking element (75) which is swivellable in the horizontal plane being pressable in the closed position against the annulus-shaped sealing surface (32') as a result of the pressurization of the piston-like section (95).

12. A device as claimed in claim 11, **characterized in that** the pressurization of the piston-like section (95) which is arranged in the housing (90) can be controlled in such a way that the supporting arm (65) with the locking element (75) can be swivelled at a small distance from the inner side (30") of the cover plate (30) in a horizontal plane and can be pressed only in the closed position by pressurization of the piston-like section (95) against the annulus-shaped sealing surface (32').

13. A device as claimed in claim 1, **characterized in that** at least one, preferably two or more stops (74,74') are arranged on the inner side (30") of the cover plate (30), which stops are arranged at a distance from each other over the circumference of the inlet opening (31) and by means of which the swivelling movement of the supporting arm (65) with the locking element (75) is limited with respect to the inlet opening (31).

14. A device as claimed in claim 1, **characterized in that** the inlet opening (31) penetrating the cover plate (30) as well as the associated sealing surface (32') are arranged on the theoretical axis of symmetry (S) of the cover plate (30), with the distance (A) between the centre (M) of the cover plate (30) and the centre (M') of the inlet opening (31) being larger than half the diameter of the same.

15. A device as claimed in claim 1, **characterized in that** the swivelling apparatus (48;48') and the inlet opening (31) are arranged at a distance from each other on the cover plate (30), with a reference line (S") connecting the centre (M') of the inlet opening (31) and the axis (Z) of the swivelling apparatus (48;48') being arranged under an acute angle (α) of approx. 45° with respect to the theoretical axis of symmetry (S) of the cover plate (30).

## Revendications

1. Dispositif de transport pneumatique de matériaux en poudre ou en grains, composé d'un réservoir de stockage (25) relié à une unité de décharge, d'une plaque de recouvrement (30) disposée à son niveau côté entrée, et d'un dispositif de pivotement (48;48'), disposé à son niveau, d'un élément de fermeture (75) logé dans l'espace interne du réservoir (25') au niveau d'un bras de support (75), lequel élément de fermeture peut pivoter, au moyen du dispositif de pivotement, autour de l'axe vertical (Z) d'un corps axial (54;94), selon un plan approximativement horizontal, par rapport à une ouverture d'entrée (31) prévue dans la plaque de recouvrement (30), et, peut être amené en prise pour fermeture, avec interruption simultanée de l'écoulement de matériau, ou hors de prise pour ouverture afin de charger le réservoir de stockage (25), **caractérisé par** une surface d'appui (77) circulaire, disposée sur le côté orienté vers la plaque de recouvrement (30), qui, lors d'un mouvement de pivotement de l'élément de fermeture (75), peut être amenée en prise pour fermer de façon étanche avec une surface d'étanchéité (32') circulaire coordonnée dans la direction de la circonférence à l'ouverture d'entrée (31), où l'élément de fermeture (75) peut en outre être comprimé contre la surface d'étanchéité (32') de la plaque de recouvrement (30) par un élément à ressort appuyé contre le bras de support (65) ou par au moins deux éléments de serrage (80,80') disposés en formant un écart entre eux et pouvant être amenés en prise avec l'élément de fermeture (75).

2. Dispositif selon la revendication 1, **caractérisé en ce que** l'élément de fermeture (75) conçu approximativement en forme de disque est logé au niveau d'une rallonge (67) tubulaire, disposée au niveau du bras de support (65) et, du fait de la force de rappel réglable, d'un ressort de torsion (68) disposé à l'intérieur et appuyé contre le bras de support (65), peut être comprimé contre la surface d'étanchéité (32').

3. Dispositif selon la revendication 2, **caractérisé par** un coulisseau (70) disposé avec le ressort de torsion (68) dans la rallonge (67) tubulaire, lequel est muni au niveau d'une extrémité d'une bride d'appui (71) pour loger l'élément de fermeture (75), et au niveau de l'autre extrémité d'un assemblage vissé (72,73) pour régler la force de rappel du ressort de torsion (68) au niveau du bras de support (65).

4. Dispositif selon la revendication 1, **caractérisé en ce que** l'élément de fermeture (75) approximativement en forme de disque est logé au niveau d'une traverse (62) disposée au niveau du bras de support (65) et pourvue d'une surface d'appui (62') plane ou bombée, et peut être comprimé contre la surface d'étanchéité (32') au moyen d'au moins deux éléments de serrage (80,80') disposés en formant un écart entre eux sur la face interne (30") de la plaque de recouvrement (30) dans la périphérie de l'ouverture d'entrée (31).

5. Dispositif selon la revendication 4, **caractérisé en ce que** les éléments de serrage (80,80') présentent respectivement en tant que patins de compression des rouleaux logés de façon à pivoter (85,85'), qui peuvent être amenés en prise avec une surface de roulement (79') disposée au niveau du coté orienté vers l'élément de fermeture (75) et conçue en se rétrécissant du centre dans la direction de la paroi latérale circulaire externe (76).

6. Dispositif selon l'une des revendications 4 et 5, **caractérisé en ce que** les éléments de serrage (80,80') sont fixés de façon amovible au niveau de la plaque de recouvrement (30) respectivement par un assemblage à vis (83,84) et à l'opposé l'un de l'autre par rapport à l'ouverture d'entrée (31) et que les rouleaux (85,85') peuvent être comprimés par un élément à ressort coordonné (86), selon une pression de compression réglable, contre la surface de roulement inclinée (79') de l'élément de fermeture (75).

7. Dispositif selon la revendication 1, **caractérisé en ce que** la surface d'étanchéité (32') circulaire est meulée au niveau de la face interne (30") de la plaque de recouvrement (30) ou disposée au niveau d'une bague d'étanchéité (32) utilisée dans l'ouverture d'entrée (31) de la plaque de recouvrement (30).

8. Dispositif selon la revendication 7, **caractérisé en ce que** la bague d'étanchéité (32) est placée de façon amovible dans un évidement (34) disposé dans la plaque de recouvrement (30) de façon amovible et de façon décalée par rapport à l'ouverture d'entrée (31).

9. Dispositif selon l'une des revendications 7 ou 8, **caractérisé en ce que** la bague d'étanchéité (32) utilisée dans l'évidement circulaire (34) de la plaque de recouvrement (30) est réalisée en acier trempé ou inoxydable et est fixée de façon amovible au moyen de vis réparties sur la périphérie.

10. Dispositif selon l'une des revendications 1 à 4, **caractérisé en ce que** l'élément de fermeture (75) est logé avec un élément de butée (78), disposé à son niveau et pourvu d'un évidement (78'), au niveau d'une rallonge (67) ou au niveau d'une traverse (62) et peut pivoter dans un plan horizontal par rapport au bras de support (65).

11. Dispositif selon la revendication 1, **caractérisé en ce que** le corps axial (94) prévu pour loger le bras de support (65) est logé avec un élément (95) en forme de piston disposé à son niveau dans un logement (90) conçu en tant que chambre de pression et fixé à la plaque de recouvrement (30), l'élément de fermeture (75) pouvant pivoter dans un plan horizontal pouvant être comprimé contre la surface d'étanchéité (32') circulaire en position de fermeture du fait de la charge de pression de l'élément en forme de piston (95).

12. Dispositif selon la revendication 11, **caractérisé en ce que** la charge de pression de l'élément (95) en forme de piston disposé dans le logement (90) peut être commandée de façon telle que le bras de support (65) peut pivoter avec l'élément de fermeture (75) selon un faible écart vers la face interne (30") de la plaque de recouvrement (30) dans le plan horizontal, et peut seulement être comprimé en position de fermeture contre la face d'étanchéité (32') circulaire par charge de pression de l'élément en forme de piston (95).

13. Dispositif selon la revendication 1, **caractérisé en ce que** sont disposées au niveau du côté interne (30") de la plaque de recouvrement (30), au moins une, mais de préférence deux butées ou plus (74,74'), disposées en formant un écart entre elles au niveau de la périphérie de l'ouverture d'entrée (31), butées au moyen desquelles le mouvement de pivotement du bras de support (65) avec l'élément de fermeture (75) est limité par rapport à l'ouverture d'entrée (31).

14. Dispositif selon la revendication 1, **caractérisé en ce que** l'ouverture d'entrée (31), traversant la plaque de recouvrement (30), et la surface d'étanchéité coordonnée (32') sont disposées sur l'axe de symétrie théorique (S) de la plaque de recouvrement (30), l'écart (A) entre le milieu (M) de la plaque de recouvrement (30) et le milieu (M') de l'ouverture d'entrée (31) étant conçu pour être supérieur à la moitié du diamètre de celle-ci.

15. Dispositif selon la revendication 1, **caractérisé en ce que** le dispositif de pivotement (48;48') et l'ouverture d'entrée (31) sont disposés au niveau de la plaque de recouvrement (30) en formant un écart entre eux, une ligne de référence (S") reliant le milieu (M') de l'ouverture d'entrée (31) et l'axe (Z) du dispositif de pivotement (48;48') étant disposé par rapport à l'axe de symétrie théorique (S) de la plaque de recouvrement (30) en formant un angle aigu (α) environ égal à 45°.
